(19) Europäisches Patentamt
European Patent Office
Office européen des brevets

(11) **EP 4 250 755 A1**

(12) **EUROPEAN PATENT APPLICATION**

(43) Date of publication:
**27.09.2023 Bulletin 2023/39**

(21) Application number: **23162873.6**

(22) Date of filing: **20.03.2023**

(51) International Patent Classification (IPC):
**H04N 23/67** $^{(2023.01)}$ **H04N 23/61** $^{(2023.01)}$
**H04N 23/63** $^{(2023.01)}$ **H04N 23/959** $^{(2023.01)}$

(52) Cooperative Patent Classification (CPC):
**H04N 23/67; H04N 23/61; H04N 23/631;**
**H04N 23/959**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.03.2022   JP 2022046103**

(71) Applicant: **CANON KABUSHIKI KAISHA**
**Tokyo 146-8501 (JP)**

(72) Inventors:
• **KATO, Yuichiro**
**Tokyo 146-8501 (JP)**
• **MIZUSHIMA, Masayasu**
**Tokyo 146-8501 (JP)**
• **MATSUMOTO, Toru**
**Tokyo 146-8501 (JP)**
• **MORIYOSHI, Akino**
**Tokyo 146-8501 (JP)**
• **NAGANO, Toshimune**
**Tokyo 146-8501 (JP)**

(74) Representative: **TBK**
**Bavariaring 4-6**
**80336 München (DE)**

(54) **CONTROL APPARATUS, LENS APPARATUS, IMAGE PICKUP APPARATUS, CAMERA SYSTEM, CONTROL METHOD, AND PROGRAM**

(57) A control apparatus (9) is provided for a camera system (1) that includes an image pickup apparatus (3) including an image sensor (1106) and a lens apparatus (2) including an optical system. The optical system includes at least one optical member (26, 28) configured to tilt a focal plane relative to an imaging plane of the image sensor. The control apparatus includes an acquiring unit (9a) configured to acquire information about an instructed object, and a control unit (9b) configured to acquire information about a position of the object for constructing the focal plane based on information about the instructed object.

FIG. 1A

**Description**

BACKGROUND

Technical Field

One of the aspects of the disclosure relates to a control apparatus, a lens apparatus, an image pickup apparatus, a camera system, a control method, and a program.

Description of the Related Art

An optical system has conventionally been proposed which has a tilt effect that tilts a focal plane so that the focal plane is entirely and satisfactorily focused on an object plane that is tilted relative to an optical axis of an imaging optical system. Japanese Patent Laid-Open No. (JP) 2019-90931 discloses a surveillance camera system that includes a lens unit having the tilt effect and a camera apparatus, determines a tilt amount for each specific area set in an imaging range, and focuses an object on a desired focal plane.

However, in a case where the position of the camera apparatus changes, the camera system disclosed in JP 2019-90931 needs to set the tilt amount for each specific area. Therefore, hand-held imaging using the camera system disclosed in JP 2019-90931 may not be able to acquire the desired tilt effect.

SUMMARY

One of the aspects of the embodiment provides a control apparatus that can construct a desired focal plane for a desired object or object plane using a desired tilt effect in hand-held imaging.

The present invention in its first aspect provides a control apparatus as specified in claims 1 to 8.

The present invention in its second aspect provides a lens apparatus as specified in claims 9 and 10.

The present invention in its third aspect provides an image pickup apparatus as specified in claim 11.

The present invention in its fourth aspect provides a camera system as specified in claim 12.

The present invention in its fifth aspect provides a control method as specified in claim 13.

The present invention in its sixth aspect provides a program as specified in claim 14.

Further features of the disclosure will become apparent from the following description of embodiments with reference to the attached drawings.

BRIEF DESCRIPTION OF THE DRAWINGS

FIGs. 1A and 1B are sectional views of a camera system according to one embodiment of the disclosure.

FIG. 2 is a flowchart illustrating a control method by a lens-side CPU.

FIG. 3 is an electrical configuration diagram of the camera system.

FIGs. 4A to 4C explain the Scheimpflug principle.

FIG. 5 is a schematic diagram of a display unit.

FIG. 6 illustrates an object plane in a space based on an image sensor.

FIG. 7 illustrates an object position instructed (designated or specified) by a photographer.

FIG. 8 explains a method for determining a plane to be set to an object plane.

FIG. 9 illustrates a positional shift between object planes.

FIG. 10 illustrates that the object planes illustrated in FIG. 9 intersect each other.

DESCRIPTION OF THE EMBODIMENTS

Referring now to the accompanying drawings, a detailed description will be given of embodiments according to the disclosure. Corresponding elements in respective figures will be designated by the same reference numerals, and a duplicate description thereof will be omitted.

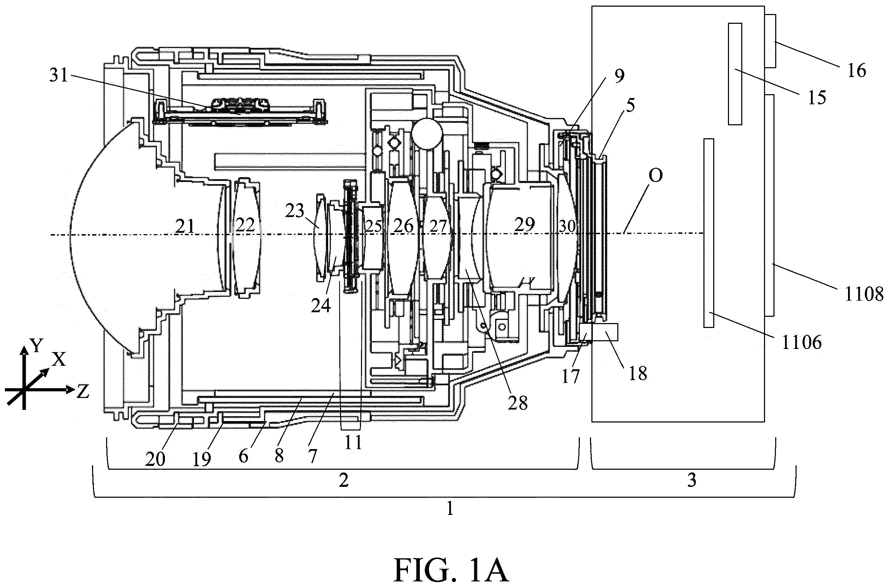

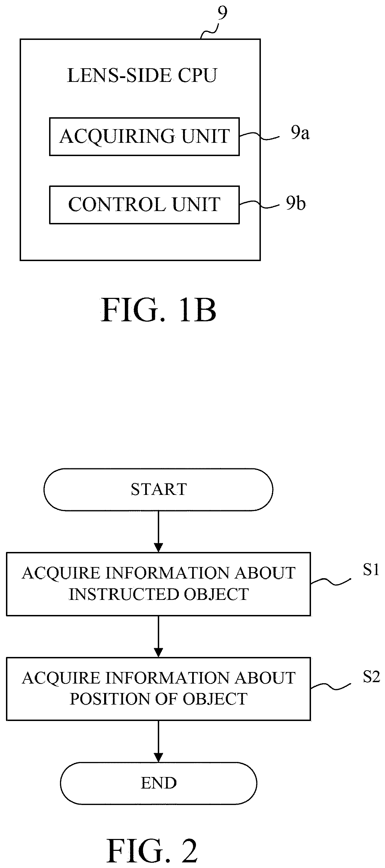

FIG. 1A is a sectional view of a camera system 1 according to an embodiment of the disclosure. The camera system 1 includes a lens barrel (lens apparatus) 2 and a camera (image pickup apparatus) 3. The lens barrel 2 and the camera 3 are connected to each other via a mount 5 provided to the lens barrel 2 and an unillustrated mount provided on the camera 3, and communicate with each other via a lens-side communication unit 17 provided to the lens barrel 2 and a camera-side communication unit 18 provided to the camera 3. The lens-side communication unit 17 and the camera-side communication unit 18 respectively include contacts 1009 and 1010 for supplying power from the camera 3 to the lens barrel 2. In this embodiment, a vertical direction (gravity direction) in FIGs. 1A and 1B is set to a Y-axis direction. A direction parallel to an optical axis O of the optical system included in the lens barrel 2 is set to a Z-axis direction, and an X-axis direction is set to a direction orthogonal to the Y-axis direction and the Z-axis direction.

The camera 3 includes an image sensor 1106, a display unit 1108, a camera-side CPU 15, and a viewfinder 16. By controlling an unillustrated shutter by the camera-side CPU 15, an image formed through the lens barrel 2 can be exposed to the image sensor 1106 for an arbitrary period of time and captured. The display unit 1108 displays a captured image and a setting screen for changing various settings of the camera system 1. In this embodiment, the display unit 1108 is provided on the back surface of the camera 3 and has a touch panel function. Peeping through the viewfinder 16, the photographer can confirm the captured image and input his visual line.

The lens barrel 2 includes an optical system, a zoom operation ring 6, a guide barrel 7, a cam barrel 8, a lens-side CPU 9, and an aperture stop mechanism 11. The optical system includes a first lens unit 21, a second lens unit 22, a third lens unit 23, a fourth lens unit 24, a fifth lens unit 25, a sixth lens unit 26, a seventh lens unit 27, an eighth lens unit 28, a ninth lens unit 29, and a tenth lens unit 30. By moving at least one lens (optical member) included in the optical system, this embodiment achieves at least one of a tilt effect that tilts the focal plane relative to the imaging plane of the image sensor 1106 and a shift effect that shifts the imaging range. Each lens is held by a barrel having cam followers. Each cam follower is engaged with a linear groove parallel to the optical axis O provided in the guide barrel 7 and a cam groove inclined to the optical axis O provided in the cam barrel 8. As the zoom operation ring 6 is rotated, the cam barrel 8 is rotated and a positional relationship of each lens in the Z-axis direction changes. Thereby, the focal length of the lens barrel 2 changes. The focal length of the lens barrel 2 can be detected by an unillustrated zoom position detector configured to detect a rotating amount of the zoom operation ring 6. The lens-side CPU 9 changes an aperture diameter of the optical system by controlling the aperture stop mechanism 11.

The second lens unit 22 is a focus unit (focus member) that performs focusing by moving in the Z-axis direction. The lens-side CPU 9 controls the second lens unit 22 via a vibration actuator 31 using a detection signal from a detector that detects a moving amount of the second lens unit 22.

This embodiment can achieve the tilt effect and the shift effect by moving the sixth lens unit 26 and the eighth lens unit 28 in a direction orthogonal to the optical axis O. More specifically, moving the sixth lens unit 26 and the eighth lens unit 28 in opposite directions produces the tilt effect, and moving them in the same direction produces the shift effect. The lens-side CPU 9 controls the sixth lens unit 26 via a driving unit using a signal from an unillustrated detector that detects a moving amount of the sixth lens unit 26. The lens-side CPU 9 controls the eighth lens unit 28 via a driving unit using a signal from an unillustrated detector that detects a moving amount of the eighth lens unit 28. A driving unit for moving each of the sixth lens unit 26 and the eighth lens unit 28 is, for example, a stepping motor or a voice coil motor (VCM). The tilt effect may also be acquired by tilting (rotating) the lens.

As illustrated in FIG. 1B, the lens-side CPU 9 includes an acquiring unit 9a and a control unit 9b, and controls the operation of each component of the lens barrel 2. The acquiring unit 9a acquires information about the instructed object. The control unit 9b acquires information about the position of the object for constructing an object plane (focus plane) based on the information about the instructed object. Although the lens-side CPU 9 is mounted inside the lens barrel 2 in this embodiment, it may be configured as a control apparatus different from the lens barrel 2. Alternatively, the camera-side CPU 15 may have the functions of the acquiring unit 9a and the control unit 9b.

FIG. 2 is a flowchart illustrating a control method by the lens-side CPU 9. In step S1, the acquiring unit 9a acquires information about the instructed object. In step S2, the control unit 9b acquires information about the position of the object for constructing the object plane based on the information about the instructed object.

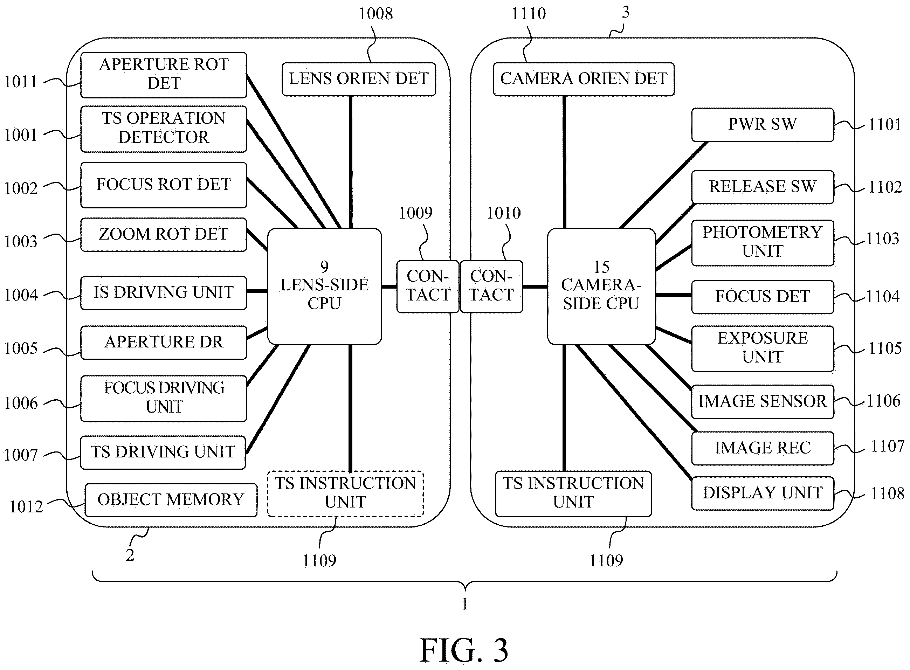

FIG. 3 is an electrical configuration diagram of the camera system 1. A description will now be given of a control flow inside the camera 3.

The camera-side CPU 15 includes a microcomputer and controls the operation of each component within the camera 3. In a case where the lens barrel 2 is attached to the camera 3, the camera-side CPU 15 communicates with the lens-side CPU 9 via the lens-side communication unit 17 and the camera-side communication unit 18. Information (signal) transmitted from the camera-side CPU 15 to the lens-side CPU 9 includes moving amount information on the second lens unit 22, focus shift information, and orientation information on the camera 3 based on a signal from a camera orientation detector 1110 such as an acceleration sensor. The information further includes object distance information on the object based on a signal from a tilt/shift (TS) instruction unit 1109 that instructs a desired object that the photographer wants to focus on, imaging range information that specifies a desired imaging range (field of view), and the like.

Information (signal) that the lens-side CPU 9 transmits to the camera-side CPU 15 includes optical information such as the imaging magnification of the lens, and lens function information such as zooming and image stabilization of the lens barrel 2. The information further includes orientation information on the lens barrel 2 based on a signal from a lens orientation detector 1008 such as a gyro sensor or an acceleration sensor.

A power switch 1101 is a switch that can be operated by the photographer, and is used to start the camera-side CPU 15 and power supply to each actuator, sensor, etc. in the camera system 1. A release switch 1102 is a switch that can be operated by the photographer, and includes a first stroke switch SW1 and a second stroke switch SW2. A signal from the release switch 1102 is input to the camera-side CPU 15. The camera-side CPU 15 becomes an imaging preparation state in response to the input of a turning-on signal from the first stroke switch SW 1. In the imaging preparation state, a photometry unit 1103 measures object luminance and a focus detector 1104 performs focus detection.

The camera-side CPU 15 calculates an F-number (aperture value) of the aperture stop mechanism 11 and an exposure amount (shutter speed) of the image sensor 1106 based on the photometry result of the photometry unit 1103. The camera-side CPU 15 also determines a moving amount (including the driving direction) of the second lens unit 22 based on the focus information (defocus amount and defocus direction) of the optical system detected by the focus detector 1104. Information about the moving amount of the second lens unit 22 is transmitted to the lens-side CPU 9.

As described above, this embodiment provides the tilt effect and the shift effect by moving the sixth lens unit 26 and the eighth lens unit 28 in the direction orthogonal to the optical axis O. The camera-side CPU 15 calculates a tilt driving amount for focusing on the desired object instructed by the TS instruction unit 1109. The TS instruction unit 1109 is included in the display unit 1108 having the touch panel function in this embodiment. The camera-side CPU 15 also calculates a shift driving amount for changing the current imaging range to an imaging range instructed by the TS instruction unit 1109. The camera-side CPU 15 transmits information about the acquired driving amounts to the lens-side CPU 9. The sixth lens unit 26 and the eighth lens unit 28 are controlled based on the information on the driving amounts described above.

The number of objects instructed by the TS instruction unit 1109 may be a plurality. Even if objects at different distances are instructed, they can be focused if they are located on the object plane tilted by the tilt effect. The TS instruction unit 1109 may be provided in the lens barrel 2 instead of the camera 3. The function of the TS instruction unit 1109 may be assigned to an operation unit provided to the camera system 1.

The camera-side CPU 15 starts decentering an unillustrated image stabilizing lens, that is, controlling camera shake correction (image stabilizing operation) in a case where a predetermined imaging mode is set. If the lens barrel 2 does not have the image stabilizing function, no camera shake correction (image stabilizing operation) is performed. The camera-side CPU 15 transmits an aperture driving command to the lens-side CPU 9 in response to the input of the turning-on signal from the second stroke switch SW2, and sets an F-number of the aperture stop mechanism 11 to the previously acquired F-number. The camera-side CPU 15 also sends an exposure start command to an exposure unit 1105 to cause an unillustrated mirror to retract and an unillustrated shutter to open. In a case where the camera 3 is a mirrorless camera, no mirror retraction operation is performed. The camera-side CPU 15 causes the image sensor 1106 to perform photoelectric conversion of the object image, that is, exposure operation.

An imaging signal from the image sensor 1106 is digitally converted by a signal processing unit in the camera-side CPU 15, and receives various correction processing, and is output as an image signal. The image signal (data) is stored in an image recorder 1107 such as a semiconductor memory such as a flash memory, a magnetic disk, an optical disc, or the like.

The display unit 1108 can display an image captured by the image sensor 1106 during imaging. The display unit 1108 can display an image recorded in the image recorder 1107.

A description will now be given of a control flow inside the lens barrel 2. A focus operation rotation detector 1002 detects rotation of the focus operation ring 19. An aperture operation rotation detector 1011 detects rotation of the aperture operation ring 20. A zoom operation rotation detector 1003 detects rotation of the zoom operation ring 6. An object memory 1012 stores a spatial position of the object instructed by the TS designating unit 1109 in the imaging range (positional information in a space based on the image sensor 1106). The spatial position includes an object distance and coordinate information on a spatial coordinate system based on the image sensor 1106. A TS operation detector 1001 includes a manual operation unit for obtaining the tilt effect and the shift effect, and a sensor configured to detect an operation amount of the manual operation unit. An image stabilization (IS) driving unit 1004 includes a driving actuator for the image stabilizing lens that performs the image stabilizing operation and a driving circuit for the driving actuator. If the lens barrel 2 has no image stabilizing function, this configuration is unnecessary. A focus driving unit 1006 includes the second lens unit 22 and a vibration actuator 31 that moves the second lens unit 22 in the Z-axis direction according to moving amount information. The moving amount information may be determined based on a signal from the camera-side CPU 15 or may be determined based on a signal output by operating the focus operation ring 19. An electromagnetic aperture driving unit 1005 changes the aperture stop mechanism 11 to an aperture state corresponding to the instructed F-number according to an instruction from the lens-side CPU 9 that has received an aperture driving command from the camera-side CPU 15 or according to an instruction from the photographer via the aperture operation ring 20. A TS driving unit 1007 moves the sixth lens unit 26 and the eighth lens unit 28 according to an instruction from the lens-side CPU 9 based on the object distance, the position information, and the imaging range information from the camera-side CPU 15. The lens-side CPU 9 properly controls the TS driving unit 1007 and the focus driving unit 1006 in order to obtain a desired in-focus state. The lens barrel 2 has an optical characteristic that changes a focus state even if the object distance does not change due to the shift operation of the sixth lens unit 26 and the eighth lens unit 28, and the TS driving unit 1007 and the focus driving unit 1006 are properly controlled based on the optical characteristic.

A gyro sensor electrically connected to the lens-side CPU 9 is provided inside the lens barrel 2. The gyro sensor detects angular velocities of vertical (pitch direction) and horizontal (yaw direction) shakes of the camera system 1 and outputs the detected values to the lens-side CPU 9 as angular velocity signals. The lens-side CPU 9 electrically or mechanically integrates the angular velocity signals in the pitch direction and the yaw direction from the gyro sensor, and calculates a displacement amount in each direction, that is, a pitch-direction shake amount and a yaw-direction shake amount (referred to as an angular shake amount collectively).

The lens-side CPU 9 controls the IS driving unit 1004 based on a combined displacement amount of the angular shake amount and the parallel shake amount described above to move the unillustrated image stabilizing lens, thereby performing angular shake correction and parallel shake correction. If the lens barrel 2 has no image stabilizing function, this configuration is unnecessary. The lens-side CPU 9 controls the focus driving unit 1006 based on a focus shake amount to move the second lens unit 22 in the Z-axis direction, thereby performing focus shake correction.

In the lens barrel 2, the lens-side CPU 9 controls the TS driving unit 1007 based on the shake amount and displacement amount of the lens barrel 2 calculated based on the output from the gyro sensor. For example, in a case where hand-held imaging with the camera 3 causes camera shake, the object plane shifts relative to the object. Since the position of the object is stored in the object memory 1012, the camera 3 can control the TS driving unit 1007 to correct camera shake to keep the object plane corresponding to the object. In order to control the TS driving unit 1007, the signal from the acceleration sensor in the camera 3 may be used. The lens barrel 2 may include an acceleration sensor in addition to the gyro sensor.

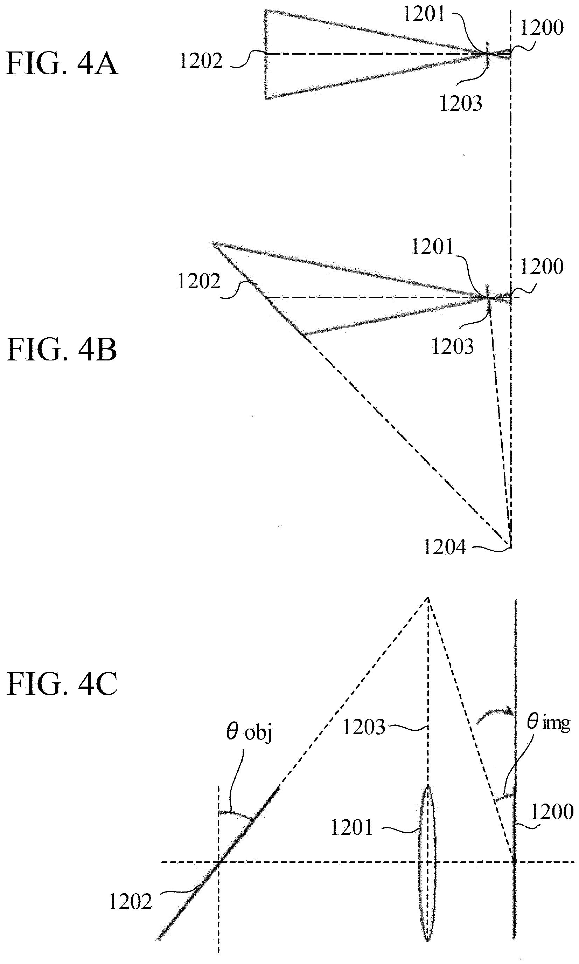

Referring now to FIGs. 4A to 4C, a description will be given of the Scheimpflug principle. FIG. 4A illustrates an in-focus range in a case where an optical axis of an optical system 1201 is not tilted relative to an imaging plane 1200. FIG. 4B illustrates an in-focus range in a case where the optical axis of the optical system 1201 is tilted relative to the imaging plane 1200. The Scheimpflug principle states that in a case where the imaging plane 1200 and a principal plane 1203 of an optical system intersect at an intersection 1204 as illustrated in FIG. 4B, an in-focus object plane 1202 also passes through the intersection 1204. Therefore, in a case where the optical axis of the optical system 1201 is tilted relative to the imaging plane 1200, the in-focus range of the object side is determined according to the Scheimpflug principle. If an object to be captured has a depth, tilting the object plane 1202 along the depth can provide an in-focus state from the near side to the far side of the object. On the other hand, tilting the principal plane 1203 of the optical system 1201 in the direction opposite to the tilt of the object having the depth can make the object plane 1202 intersect the depth direction of the object at an angle close to a right angle. In this case, the in-focus range can be extremely narrowed, so a diorama-like image can be acquired.

As illustrated in FIG. 4C, this embodiment utilizes the image plane tilt caused by the decentering of the optical system 1201, and generates tilt θobj of the object plane 1202 is generated without tilting the imaging plane 1200 by image plane tilt θimg. However, if the tilt θobj of the object plane 1202 is generated only by the optical system 1201, a decentering amount of the optical system 1201 increases and the composition shift increases. Accordingly, a lens designed to reduce aberration fluctuations during decentering may be decentered. In order to change the tilt effect, this embodiment decenters the sixth lens unit 26 that generates the tilt of the object plane and the eighth lens unit 28 that reduces the aberration fluctuation during decentering.

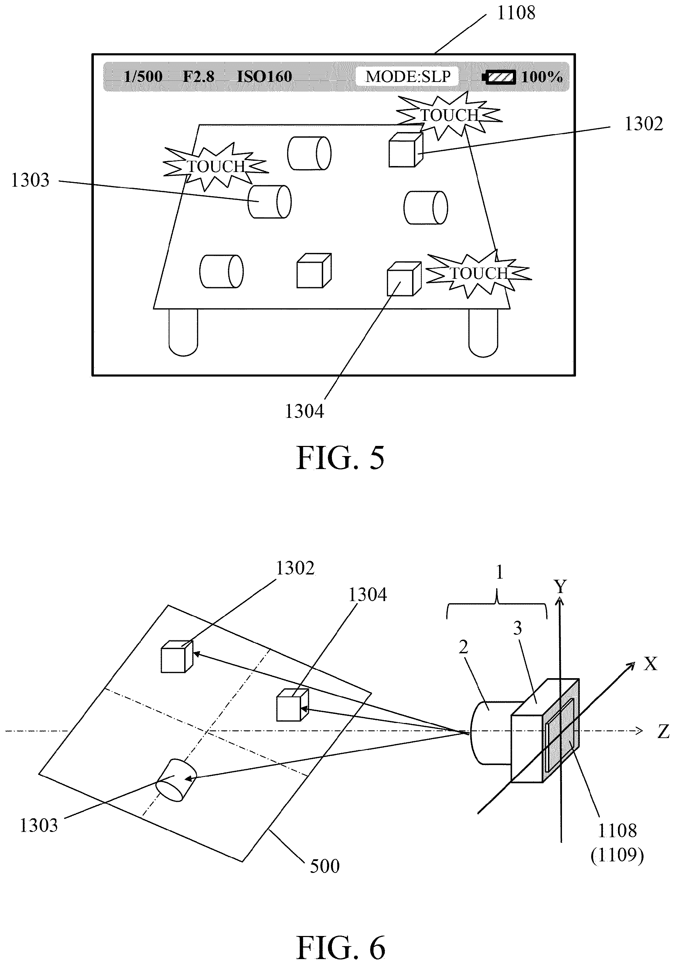

Imaging using the tilt effect will be described below. FIG. 5 is a schematic diagram of the display unit 1108. The display unit 1108 has the touch panel function and includes the TS instruction unit 1109 in this embodiment. FIG. 5 assumes so-called "still life photography (SLP)" as an imaging scene, and an imaging mode corresponding to the "still life photography" is set. Objects 1302, 1303, and 1304 are, for example, food and accessories placed on a table. Although the objects 1302, 1303, and 1304 have different imaging distances, the camera system 1 according to this embodiment can perform so-called "tilt imaging" that can focus on all of the objects 1302, 1303, and 1304. In this embodiment, the photographer instructs an object or objects to be focused on by touch operation on the display unit 1108. At this time, the acquiring unit 9a obtains information about the instructed object or objects. The control unit 9b acquires information about the position of the object (or the positions of the objects) for constructing an object plane based on the information about the instructed object(s). Thereafter, the control unit 9b moves the sixth lens unit 26 and the eighth lens unit 28 so that the object plane corresponds to a plane acquired using the information about the position of the object, so that all the desired objects can be in focus.

A description will now be given of a method of constructing an object plane by moving the sixth lens unit 26 and the eighth lens unit 28. The object plane may not be a perfect plane, but may have some curvature or unevenness.

FIG. 6 illustrates an object plane 500 in a space based on the image sensor 1106. The camera system 1 can acquire positional information on the objects 1302, 1303, and 1304 in the Z-axis direction by an unillustrated focus detecting system using infrared light or a focus detecting function installed in the image sensor 1106. The camera system 1 can acquire positional information in the X-axis direction and the Y-axis direction from the imaging positions of the objects 1302, 1303, and 1304 on the imaging surface of the image sensor 1106. Thus, since the photographer instructs an object (or objects) through the touch operation, this embodiment can acquire information about the position(s) of the instructed object(s). The acquired information is saved in the object memory 1012. An unillustrated memory in the lens barrel 2 stores a sensitivity table illustrating a relationship between moving amounts and moving directions of the sixth lens unit 26 and the eighth lens unit 28 and the tilt amount of the object plane 500 relative to the optical axis O. The camera-side CPU 15 and lens-side CPU 9 perform calculations using the position information and the sensitivity table stored in the object memory 1012, control the sixth lens unit 26 and the eighth lens unit 28 based on the calculation result, and construct the object plane 500. Instead of using the sensitivity table, for example, the relationship between the lens moving amount and the tilt amount of the object plane 500 may be calculated using a predetermined equation, and the calculation result may be used to control the sixth lens unit 26 and the eighth lens unit 28. Alternatively, the object plane 500 may be constructed by gradually moving the sixth lens unit 26 and the eighth lens unit 28 and by determining the in-focus level of each object.

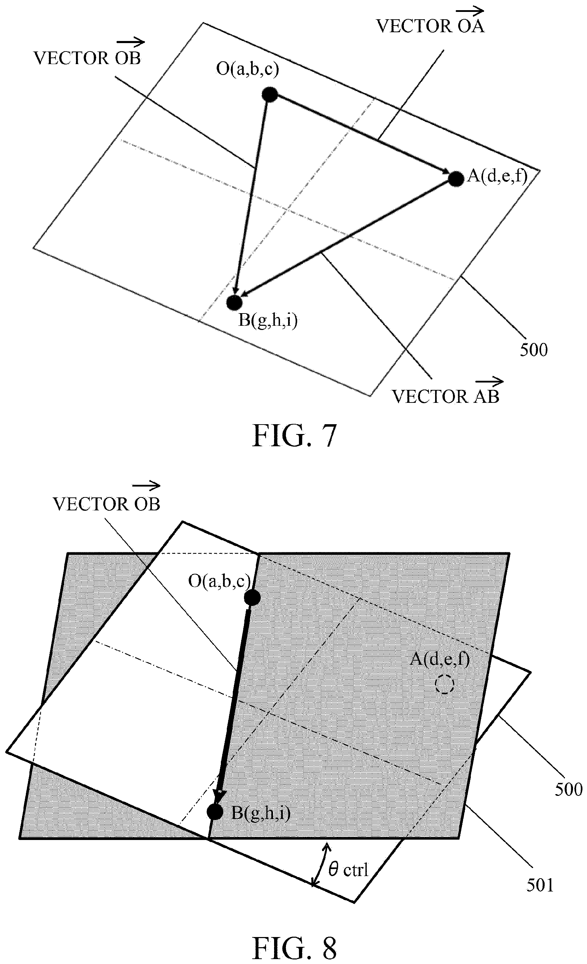

In this embodiment, as illustrated in FIG. 7, control is performed such that the object plane 500 corresponds to a plane defined by three spatial coordinate points O, A, and B indicating the object positions instructed by the photographer. In a case where the coordinates of the spatial coordinate points O, A, and B are respectively (a, b, c), (d, e, f) and (g, h, i), vectors OA and OB are respectively expressed as (d-a, e-b, f-c) and (g-a, h-b, i-c). In this case, the object plane 500 is represented using the following equations.

$$px+qy+rz+s = 0$$

$$p = (e-b)(i-c)-(h-b)(f-c)$$

$$q = (f-c)(g-a)-(i-c)(d-a)$$

$$r = (d-a)(h-b)-(g-a)(e-b)$$

$$s = -(pa+qb+rc)$$

A plane that passes through the vector OA and the spatial coordinate point B may be set to the plane that is to be the object plane 500. In this case, the photographer may use a method of instructing three objects on the display unit 1108, or may use another method. For example, a vector as a rotation axis of the object plane 500 may be instructed by an operation method called "swipe" or "flick" by sliding a finger on the display unit 1108, and the spatial coordinate point B may be instructed.

Alternatively, a plane containing two straight lines (vectors) that are parallel or intersect at one point may be set to the plane that is to be the object plane 500. In this case, two vectors may be instructed by "swiping." For example, in FIG. 7, the vectors OA and OB may be instructed. The vector instructing method may use a method that determines the Z-axis direction (depth direction) by connecting two points, for example, of an object located at a first touched position and an object located at a finger-released position.

In this embodiment, the touch operation instructs a spatial coordinate point or a vector, but the disclosure is not limited to this embodiment. For example, an instruction may be given using a visual line input using an electronic viewfinder (EVF), a rotating operation of the aperture operation ring 20, and a button or dial (not illustrated).

The photographer may determine the object plane 500 while checking a live-view image or the like so as to obtain the desired degree of blurring. FIG. 8 explains a method for determining the plane that is to be the object plane 500. A plane 501 is a plane that is being set by the photographer to the object plane 500, and is a plane in which the spatial coordinate points O and B are in focus and the spatial coordinate point A is out of focus.

Once three points to be focused are instructed, the camera system 1 according to this embodiment can construct the object plane 500 as described above, and provide imaging while the desired objects are in focus. On the other hand, for example, in so-called "reverse tilt imaging (miniature imaging)" in which cityscapes and people are captured while the top and bottom of an image are blurred, the photographer may determine where to focus and which to blur. In that case, the vector OB is defined by the spatial coordinate points O and B instructed by the photographer. The photographer instructs to rotate the plane 501 by angle θctrl using the vector OB as a rotation axis. For example, the photographer can instruct to rotate the plane 501 by the angle θctrl by the touch operation of reciprocally sliding the finger on the display unit 1108. The instruction may be given using a visual line input using the EVF, a rotating operation of the aperture operation ring 20, and the button and dial (not illustrated). Alternatively, it may be automatically determined according to the set imaging mode of the camera 3. The photographer makes the object plane 500 correspond to the plane 501 that has a desired degree of blur while maintaining the in-focus state on the desired objects (spatial coordinate points O and B).

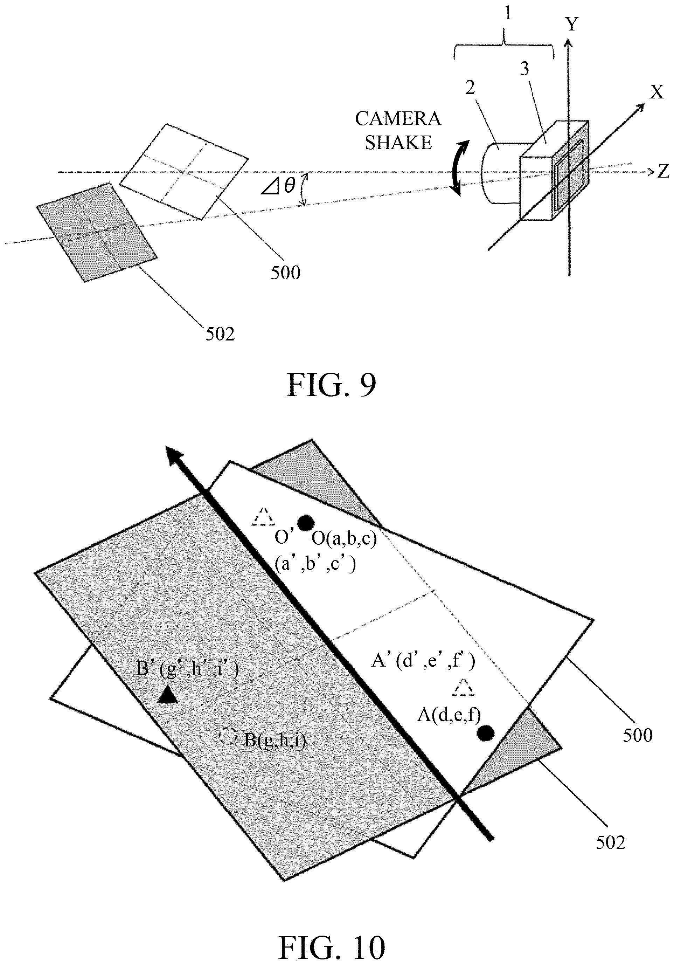

FIG. 9 illustrates a positional shift (misalignment) of the object plane 500 caused by camera shake in a case where the camera system 1 is hand-held. In a case where camera shake occurs, the object plane 500 is shifted to object plane 502. As described above, the object plane 500 is defined by the XYZ-axes in the space based on the image sensor 1106, but the object plane 502 is defined by the X'Y'Z'-axes different from the XYZ-axes.

A description will now be given of a method of making the object plane 502 correspond to the object plane 500, that is, a method of correcting the camera shake. FIG. 9 illustrates these object planes as finite planes that do not intersect with each other for explanation convenience, but the actual object planes are infinitely wide planes. Therefore, in a case where the camera system 1 is shaken by a camera shake amount Δθ due to the camera shake, the object planes 500 and 502 intersect each other as illustrated in FIG. 10.

As described above, the coordinates of the spatial coordinate points O, A, and B on the object plane 500 are (a, b, c), (d, e, f), and (g, h, i), respectively. The coordinates of the spatial coordinate points O', A', and B' on the object plane 502 are (a', b', c'), (d', e', f), and (g', h', i'), respectively. Although the coordinate axes before the camera shake and the coordinate axes after the camera shake are different, the values on each coordinate axis are the same. That is, a=a', b=b', c=c', d=d', e=e', f=f, g=g', h=h' and i=i'.

The camera system 1 can recognize the camera shake amount $\Delta\theta$ on the XYZ-axes and the X'Y'Z'-axes using the signal from the lens orientation detector 1008. Therefore, the camera system 1 can acquire the spatial coordinate points O', A', and B' as the spatial coordinate points on the XYZ-axes using the camera shake amount. Thereby, each spatial coordinate point on the object plane 502 can be controlled to return to its original position, that is, each spatial coordinate point on the object plane 500, so that camera shake can be corrected.

Another method may be used to convert the spatial coordinate points on the coordinate axes after the camera shake to the spatial coordinate points on the original coordinate axes. For example, using the equations of the object planes 500 and 502, an intersecting straight line (intersecting line, vector) is calculated. Since there are two equations for the three unknowns x, y, z, the equation of the straight line is expressed by the following equation:

$$X = \alpha Y + \beta$$

By rotating the object plane 502 about this straight line as the rotation axis can perform shake correction control (image stabilization control), the object plane 502 can correspond to the object plane 500 without calculations for each axial direction of each spatial coordinate point. In this case, the spatial coordinate points O', A', and B' do not return to the spatial coordinate points O, A, and B stored in the object memory 1012, but the objects instructed by the photographer can be focused by the rotation control about the intersecting line in which the object plane 502 intersects the object plane 500. The rotating amount of the object plane 502 can be determined by calculating the angle formed by the object planes 500 and 502. Since the rotation axis is fixed, control may be performed so as to coincide with at least one of the spatial coordinate points O, A, and B that have been stored.

There are generally six types (directions) of positional fluctuation components of the camera system 1 due to the camera shake (including three directions of rotational shift with respect to the X-axis, Y-axis, and Z-axis, and three directions of positional shift with respect to the X-axis, Y-axis, and Z-axis). Although the camera shake amount $\Delta\theta$ is a rotational shift amount about the Y-axis in FIG. 9, it may be a rotational shift amount around the X-axis or the Z-axis. Since a distance from the camera system 1 to the object (spatial coordinate point) does not change in the rotational shift around the Z-axis, the camera shake amount $\Delta\theta$ may be used for the control to return to the object plane through calculations only in the X-axis direction and the Y-axis direction of the spatial coordinate points.

In the positional shifts in the X-axis direction and the Y-axis direction, the object planes before and after the camera shake do not intersect each other, so the object distance in each axis direction does not change. Therefore, the camera shake correction control can be performed by calculating the positional shift in each axial direction. In the positional shift in the Z-axis direction, the object planes before and after the camera shake do not intersect each other, and the object distance is simply changed. The focus unit 10 can be controlled to continue focusing on the desired object plane.

If the camera shake amount is small and the focus shift is within a range of the depth of field, the control to return the object plane may not be executed.

This embodiment constructs the object plane by regarding the object as a mathematical "point." However, an actual object is usually three-dimensional, and an object distance varies within the object itself. Accordingly, a plurality of focus positions may be detected from a single object, or a concept of area recognition (object recognition) for focusing on the entire object may be used.

As described above, the configuration of this embodiment can construct a desired object plane, that is, perform desired imaging once the photographer instructs a plurality of objects, thereby shortening the work time. The camera shake correction control can perform comfortable imaging even in hand-held imaging.

Each embodiment can provide a control apparatus that can construct a desired focus plane for a desired object or object plane using a desired tilt effect in hand-held imaging.

OTHER EMBODIMENTS

Embodiment(s) of the disclosure can also be realized by a computer of a system or apparatus that reads out and executes computer-executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer-executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer-executable instructions. The computer-executable instructions may be provided to the computer, for example, from a network or the storage medium. The storage medium may include, for example, one or more of a hard disk, a random-access memory (RAM), a read-only memory (ROM), a storage of distributed computing systems, an optical disc (such as a compact disc (CD), digital versatile disc (DVD), or Blu-ray Disc (BD)™), a flash memory device, a memory card, and the like.

While the disclosure has been described with reference to embodiments, it is to be understood that the disclosure is not limited to the disclosed embodiments. The scope of the following claims is to be accorded the broadest interpretation so as to encompass all such modifications and equivalent structures and functions.

A control apparatus (9) is provided for a camera system (1) that includes an image pickup apparatus (3) including an image sensor (1106) and a lens apparatus (2) including an optical system. The optical system includes at least one optical member (26, 28) configured to tilt a focal plane relative to an imaging plane of the image sensor. The control apparatus includes an acquiring unit (9a) configured to acquire information about an instructed object, and a control unit (9b) configured to acquire information about a position of the object for constructing the focal plane based on information about the instructed object.

**Claims**

1. A control apparatus (9) for a camera system (1) that includes an image pickup apparatus (3) including an image sensor (1106) and a lens apparatus (2) including an optical system, the optical system including at least one optical member (26, 28) configured to tilt a focal plane relative to an imaging plane of the image sensor, the control apparatus comprising:

   an acquiring unit (9a) configured to acquire information about an instructed object; and
   a control unit (9b) configured to acquire information about a position of the object for constructing the focal plane based on information about the instructed object.

2. The control apparatus according to claim 1, **characterized in that** the control unit controls the at least one optical member using information about the position of the object in order to correct focus shift caused by a positional shift of the object from the optical system in a case where an orientation of the optical system changes.

3. The control apparatus according to claim 2, **characterized in that** the optical system includes a focus member configured to performs focusing by moving along an optical axis of the optical system, wherein the control unit controls the at least one optical member and the focus member so as to correct the focus shift using the information about the position of the object.

4. The control apparatus according to any one of claims 1 to 3, **characterized in that** the information about the position of the object is position information in a space based on the image sensor.

5. The control apparatus according to any one of claims 1 to 4, **characterized in that** the information about the position of the object includes coordinate information on a spatial coordinate system based on the image sensor, wherein the control unit controls the at least one optical member so that a first plane based on the information about the position of the object before an orientation of the optical system changes and a second plane based on the information about the position of the object after the orientation of the optical system changes correspond to each other.

6. The control apparatus according to claim 5, **characterized in that** the control unit controls the at least one optical member such that the second plane corresponds to the first plane using an intersecting line between the first plane and the second plane as a rotation axis.

7. The control apparatus according to claim 5 or 6, **characterized in that** the optical system includes a focus member configured to perform focusing by moving along an optical axis of the optical system, wherein the control unit controls the at least one optical member and the focus member such that the second plane corresponds to the first plane.

8. The control apparatus according to any one of claims 1 to 7, further comprising a memory configured to store the information about the position of the object.

9. A lens apparatus (2) comprising:

   the control apparatus (9) according to any one of claims 1 to 8; and
   the at least one optical member (26, 28).

10. The lens apparatus according to claim 9, **characterized in that** the at least one optical member tilts the focal plane relative to the imaging plane by moving in a direction orthogonal to an optical axis of the optical system.

**11.** An image pickup apparatus (3) comprising:

the control apparatus (9) according to any one of claims 1 to 8; and
the image sensor (1106).

**12.** A camera system (1) comprising:

the control apparatus (9) according to any one of claims 1 to 8;
the image sensor (1106); and
the optical system.

**13.** A control method for a camera system (1) that includes an image pickup apparatus (3) including an image sensor (1106) and a lens apparatus (2) including an optical system, the optical system including at least one optical member (26, 28) configured to tilt a focal plane relative to an imaging plane of the image sensor, the control method comprising the steps of:

acquiring information about an instructed object; and
acquiring information about a position of the object for constructing the focal plane based on information about the instructed object.

**14.** A program that causes a computer to execute the control method according to claim 13.

FIG. 1A

FIG. 1B

FIG. 2

FIG. 3

FIG. 4A

FIG. 4B

FIG. 4C

FIG. 5

FIG. 6

FIG. 7

FIG. 8

FIG. 9

FIG. 10

Europäisches
Patentamt

European
Patent Office

Office européen
des brevets

**EUROPEAN SEARCH REPORT**

Application Number

EP 23 16 2873

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 722 871 A1 (CANON KK [JP]) 14 October 2020 (2020-10-14) | 1-5,7-14 | INV. H04N23/67 H04N23/61 H04N23/63 H04N23/959 |
| Y | * paragraph [0014] – paragraph [0055] * * figures 1-13 * ----- | 6 | |
| Y | US 2017/192247 A1 (OKUDA TOSHIHIRO [JP]) 6 July 2017 (2017-07-06) * paragraph [0039] * * figure 2B * ----- | 6 | |

TECHNICAL FIELDS
SEARCHED      (IPC)

H04N

The present search report has been drawn up for all claims

| Place of search | Date of completion of the search | Examiner |
|---|---|---|
| The Hague | 1 August 2023 | Didierlaurent, P |

EPO FORM 1503 03.82 (P04C01)

## ANNEX TO THE EUROPEAN SEARCH REPORT
## ON EUROPEAN PATENT APPLICATION NO.

EP 23 16 2873

This annex lists the patent family members relating to the patent documents cited in the above-mentioned European search report.
The members are as contained in the European Patent Office EDP file on
The European Patent Office is in no way liable for these particulars which are merely given for the purpose of information.

01-08-2023

| Patent document cited in search report | | | Publication date | Patent family member(s) | | | Publication date |
|---|---|---|---|---|---|---|---|
| EP 3722871 | A1 | | 14-10-2020 | CN | 111698417 | A | 22-09-2020 |
| | | | | EP | 3722871 | A1 | 14-10-2020 |
| | | | | US | 2020296296 | A1 | 17-09-2020 |
| | | | | US | 2022321790 | A1 | 06-10-2022 |
| US 2017192247 | A1 | | 06-07-2017 | JP | 6788348 | B2 | 25-11-2020 |
| | | | | JP | 2017122791 | A | 13-07-2017 |
| | | | | US | 2017192247 | A1 | 06-07-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019090931 A